(19) Europäisches Patentamt
European Patent Office
Office européen des brevets

(11) **EP 0 718 254 A2**

(12) **EUROPÄISCHE PATENTANMELDUNG**

(43) Veröffentlichungstag:
26.06.1996 Patentblatt 1996/26

(51) Int. Cl.⁶: **C04B 41/84**, C04B 41/87

(21) Anmeldenummer: 95119997.5

(22) Anmeldetag: 18.12.1995

(84) Benannte Vertragsstaaten:
AT BE CH DE DK ES FR GB GR IE IT LI LU MC NL PT SE

(30) Priorität: 20.12.1994 DE 4445377

(71) Anmelder: CESIWID ELEKTROWÄRME GMBH
D-91056 Erlangen (DE)

(72) Erfinder:
• Greil, Peter, Prof. Dr.
  D-91054 Erlangen (DE)

• Erny, Tobias
  D-91052 Erlangen (DE)
• Heider, Wolfgang
  D-86161 Augsburg (DE)

(74) Vertreter: Hansen, Bernd, Dr. Dipl.-Chem. et al
Hoffmann, Eitle & Partner,
Patentanwälte,
Arabellastrasse 4
81925 München (DE)

(54) **Abrasionsfeste Oxidationsschutzschicht für SiC-Körper**

(57) Nach dem Auftragen einer gegebenenfalls Lösungsmittel enthaltenden Suspension aus einem Polysiloxan und Molybdändisilicid auf einen porösen Körper aus Siliciumcarbid wird durch die Verfahrensschritte Vernetzen der Polysiloxanphase bei Temperaturen bis maximal 400 °C, Reaktionspyrolyse in sauerstofffreier Atmosphäre im Bereich von 1000 bis 1600 °C und nachfolgende Temperaturbehandlung bei Temperaturen oberhalb 800 °C, vorzugsweise von 1400 bis 1700 °C in einer Sauerstoff enthaltenden Atmosphäre eine den Substratkörper bis zu Temperaturen von 1700 °C gegen Oxidation schützende, erosionsfeste Schutzschicht erzeugt. Neben Molybdändisilicid kann die für die Beschichtung verwendete Suspension noch Stoffe aus der Gruppe Siliciumcarbid, Silicide der Metalle Niob, Tantal, Chrom, Wolfram und Aluminium sowie Aluminiumoxidbildner enthalten.

EP 0 718 254 A2

## Beschreibung

Die Erfindung betrifft eine abrasionsfeste, Substratkörper aus porösem Siliciumcarbid gegen Oxidation durch Sauerstoff schützende, ein Matrixglas, Siliciumcarbid und Molybdändisilizid enthaltende Oberflächenschicht und ein Verfahren zur Herstellung derselben.

Bauteile aus Siliciumcarbid (SiC) werden wegen ihrer Festigkeit, Oxidations- und Kriechbeständigkeit bei hohen Temperaturen für Heiz-, Trag-, Schutz- und Konstruktionszwecke in Hochtemperaturanlagen verwendet. Beispiele sind Heizelemente, Suszeptoren, Tiegel, Schutzrohre, Strahlungsschilde, Gaslenk- und Prallplatten, Tragegestelle und -Rollen für die verschiedensten Ofentypen in Industrie und Labor. Die Dauerstandsfestigkeit derartiger Bauteile liegt, sofern sie aus den porösen, gesinterten, reaktionsgebundenen oder rekristallisierten SiC-Typen bestehen, im Bereich von 1500 °C. Bei höheren Temperaturen nimmt die Beständigkeit ab, da die zunächst unter der Einwirkung des Luftsauerstoffs nach

$$SiC + 2O_2 \longrightarrow SiO_2 + 2CO$$

gebildete, die gesamte gaszugängliche Oberfläche gegen Oxidation schützende Siliciumdioxidschicht durch ständige Abgabe gasförmiger Siliciumsuboxidphasen (SiO) geschädigt wird und damit ihre Schutzfunktion nicht mehr voll erfüllen kann. Die Verwendung von Teilen aus Siliciumcarbid im Bereich noch höherer Temperaturen in oxidierender Atmosphäre erfordert deshalb stabilere Schutzschichten, die entweder das gesamte gaszugängliche Porensystem der Körper bedecken oder die die gesamte äußere Oberfläche einschließlich der Poreneingänge zuverlässig versiegeln. Es ist auch wiederholt versucht worden, derartige Schutzschichten zur Verfügung zu stellen. Als wichtiger Bestandteil solcher Schichten tritt Molyodändisilicid (MoSi$_2$) häufig in Erscheinung.

Nach der deutschen Auslegeschrift Nr. 11 42 042 wird die Oxidationsfestigkeit von SiC-Heizleitern erhöht, wenn man ihre Oberfläche zunächst mit einer Schicht von Molybdändisilicid belegt und dieses dann durch Glühen bei Temperaturen zwischen 1300 und 1500 °C in eine glasartige, Molybdän, Silicium, Sauerstoff und zum Teil auch Kohlenstoff enthaltende, gegen Oxidation schützende Schicht überführt. In der später veröffentlichten Patentschrift DE 14 96 660 wird die Wirksamkeit so erzeugter Schutzschichten wieder in Frage gestellt. Diese Schichten hätten immer noch Poren, die den Zutritt von oxidierenden Gasen ermöglichten. Zur Überwindung dieser Schwierigkeiten wird in der später veröffentlichten Schrift vorgeschlagen, aus einem ein Metallsilicid enthaltenden, aus Siliciumdioxid, Aluminiumoxid, Erdalkali- und Alkalioxid gebildeten Glas eine dichte, gegen Oxidation schützende Schicht zu erzeugen. Das eingebundene Silicid, z.B. MoSi$_2$, soll in dieser Schicht als Getter wirken und eindiffundierenden Sauerstoff unter Reaktion zu ausschließlich nicht flüchtigen Reaktionsprodukten, hauptsächlich SiO$_2$, binden. Eine weitere, Molydändisilicid und eine niedrig schmelzende Matrix wie ein Glas, bzw. eine Glaskeramik als bei hoher Temperatur mechanische Spannungen abbauende Komponente enthaltende Schutzschicht für im wesentlichen aus Kohlenstoff bestehende Substrate ist durch die DE 40 34 001 A1 offenbart.

Das Hauptproblem beim Einsatz von Molybdändisilicidhaltigen Schutzschichten mit Glasmatrices liegt in der Temperaturwechselbeständigkeit der an der jeweiligen technischen Lösung beteiligten Materialien. Beim ständigen Wechsel von hohen Temperaturen, darunter werden hier Temperaturen von 1700 bis 1750 °C verstanden, auf Raumtemperatur werden an die die Haftung bewerkstelligenden Grenzflächen zwischen Substrat und Schutzschicht Anforderungen gestellt, die diese wegen unterschiedlicher Stoffcharakteristika, insbesondere unterschiedlicher thermischer Ausdehnungskoeffizienten nicht immer erfüllen können. Schichtablösungen und Risse sind dann im abgekühlten Zustand die Folge. Solche Schäden treten besonders dann auf, wenn die die Haftung vermittelnden Grenzflächen wegen mechanischer Belastung der Bauteile, z.B. durch in einem Ofen auf sie gelegtes, thermisch zu behandelndes Gut, zusätzlichen mechanischen Spannungen ausgesetzt sind. Beim erneuten Aufheizen auf Arbeitstemperatur heilen, falls überhaupt möglich, diese Schäden nicht in ausreichendem Maße aus und der Substratkörper wird geschädigt.

Eine weitere Anforderung an thermisch hochbelastbare, gegen Oxidation schützende Überzüge ist ihre Erosionsfestigkeit, die ungenügend ist, wenn die Schichten bei hohen Temperaturen vergleichsweise stark erweichte, z.B. Alkali- oder/und Erdalkalimetall-haltige Gläser enthalten und keine genügend abrasionsfesten Substanzen aufweisen.

Der Erfindung lag deshalb die Aufgabe zugrunde, festhaftende, bis zu Temperaturen von 1700 °C dauertemperaturbeständige und zusätzlich erosionsfeste Oxidationsschutzschichten für poröse Teile aus Siliciumcarbid zu schaffen und ein Verfahren zur Herstellung derartiger Schichten anzugeben.

Die Aufgabe wird mit den kennzeichnenden Teilen der Patentansprüche 1 und 5 gelöst. Die von den Ansprüchen 1 und 5 abhängigen Ansprüche, die hiermit in die Beschreibung eingeführt werden, sind bevorzugte Ausführungsformen der Erfindung.

Ein wesentliches Merkmal der erfinderischen Lösung ist die Verwendung von Polysiloxanen als Vorprodukte für die Erzeugung eines unter anderem Siliciumcarbid enthaltenden Matrixglases. Beim Entstehen der Siliciumcarbid-Phasen aus dem Siloxan wachsen diese auch auf dem ebenfalls aus Siliciumcarbid bestehenden Substrat auf und bewirken dadurch im Zusammenhang mit den anderen Verankerungseffekten einer Glasschmelze an einer porösen Oberfläche eine besonders gute Haftung. Das Substrat kann dabei jede beliebige Form wie beispielsweise Platten-, Block-, Rohr-, Tiegel-, Stab- oder Mäanderform haben.

Polymere Organosiliciumverbindungen wie Siloxane sind bereits erfolgreich für die Herstellung von keramischen Fasern, Pulvern und Verschleißschutzschichten eingesetzt worden. Jedoch konnten wegen des bei der pyrolytischen Polymer/Keramikumwandlung auftretenden enormen Dichtesprungs von mehr als 100 % und der damit einhergehenden Volumenschwindung von bis zu 80 % keine Bauteile oder Schichten mit hoher Dichte erhalten werden. Erst durch den Einbau reaktiver Füllerpulver in die Polymermatrix gelang es, die bei der Umwandlung in den keramischen Zustand auftretende Schwindung soweit zu minimieren, daß größer dimensionierte Bauteile hergestellt werden konnten (EP 0 412 428 B1). So erhaltene Verbundwerkstoffe zeichnen sich zwar durch geringe Schwindungswerte aus, sind jedoch offen porös. Das Wesen der Erfindung besteht nun darin, ein Polysiloxanharz in flüssiger Form mit feinpulverigem Molybdändisilicid als reaktivem Füllstoff zu mischen, bis eine Suspension entstanden ist, einen porösen Substratkörper aus Siliciumcarbid damit zu beschichten und diesen Überzug durch eine nachfolgende thermische Behandlung in eine zusammenhängende, praktisch gasdichte und damit gegen Oxidation schützende Schicht aus einem Verbundwerkstoff umzuwandeln. Dies geschieht, indem der Schicht durch leichte Temperaturerhöhung oder/und durch Anlegen eines Vakuums zunächst verdampfbare Substanzen wie Wasser oder Lösungsmittel entzogen werden. Sodann wird die Polysiloxanphase im Temperaturbereich bis maximal 400 °C thermisch vernetzt. Anschließend wird das Bauteil in einer nicht oxidierend wirkenden Atmosphäre, z.B. in Argon oder Stickstoff, bei Temperaturen von 1000 bis 1500 °C pyrolysiert, wobei als Pyrolyseprodukte Wasserstoff, niedere Kohlenwasserstoffe und geringe Mengen CO entweichen. Bei dieser Pyrolyse entsteht im wesentlichen ein Si-O-C-Matrixglas, in das $MoSi_2$ eingelagert ist und das in gewissem Umfang carbidische und, falls Stickstoff beim reaktionspyrolytischen Schritt als umgebende Atmosphäre verwendet wurde, auch nitridische Phasen enthalten kann. Da die nitridischen Phasen nicht so hochtemperaturbeständig sind wie die anderen genannten Bestandteile, sollte die Reaktionspyrolyse, falls sie unter Stickstoff durchgeführt wird, zur Vermeidung der Bildung beachtlicher Mengen nitridischer Phasen nicht über 1250 °C durchgeführt werden. Das Molybdänsilicid und die carbidischen Phasen bewirken im Zusammenhang mit dem Si-O-C-Matrixglas die Hochtemperaturbeständigkeit, die Korrosions- sowie die Oxidationsfestigkeit der Schutzschicht. Wenn außer Molybdändisilicid noch andere keramische Siliciumverbindungen oder -Phasen oder Aluminium enthaltende Verbindungen oder Phasen in der aufgetragenen Schicht vorhanden sind, können diese gleichermaßen an den Reaktionen teilhaben, die bei den bei den hohen Temperaturen durchgeführten Verfahrensschritten ablaufen. Die so erzeugte glasige Schicht besitzt nur mehr Poren und Risse, die kleiner als 10 μm sind. Diese Restporosität wird durch eine nachfolgende Temperaturbehandlung an Luft bei Mindesttemperaturen von 800 °C, vorzugsweise bei Temperaturen von 1500 bis 1700 °C verschlossen. Bei den bei der Reaktionspyrolyse und dem Verglasungsschritt herrschenden hohen Temperaturen kann auch ein Teil des $MoSi_2$ durch Reaktion mit dem im Matrixglas vorhandenen Kohlenstoff zu $Mo_2C$ und SiC umgewandelt werden. Der Rest der Füllstoffphase liegt in dem so entstandenen Verbundwerkstoff als unreagiertes $MoSi_2$ oder als $Mo_5Si_3$ vor. Diese Substanzen, insbesondere das Molybdändisilid, das Siliciumcarbid sowie die aus dem Siloxan entstandene Si-O-C-Phase bewirken die hervorragende Eigenschaftskombination dieser Schicht: Oxidationsbeständigkeit, Schichtstabilität und Abrasionsfestigkeit.

Die letzte Temperaturbehandlung unter oxidierenden Bedingungen muß nicht direkt im Anschluß an den Keramisierungsprozeß vorgenommen werden. Es ist auch möglich, ihn beim ersten bestimmungsgemäßen Aufheizen des mit der verglasten Schicht überzogenen Körpers auf Betriebstemperatur in oxidierender Atmosphäre auszuführen.

Gegenstand der Erfindung ist auch eine nach dem beschriebenen Verfahren hergestellte Schutzschicht.

Die Pyrolyse von Siloxanen zu Siliciumcarbid enthaltenden Produkten ist bekannt. Siehe hierzu z.B. White et.al., Preparation of Silicon Carbide from Organosilicon Gels, Parts I and II, Advanced Ceramic Materials, Vol. 2, No. 1 [1987], S. 45 bis 59. Dort ist auch die Herstellung geeigneter Polysiloxan-Gele beschrieben. Verwendbare Polysiloxanformulierungen sind jedoch auch von den bekannten Herstellern siliciumorganischer Verbindungen beziehbar. Als Ausgangsmaterial für die Herstellung erfindungsgemäßer Schichten sind sowohl kondensationswie additionsvernetzende Siloxanharze geeignet. Die verwendeten Siloxane können eine Vielzahl organischer Liganden wie beispielsweise Alkyl-, Aryl-, insbesondere Phenyl- oder Alkoxygruppen aufweisen. Nach einer bevorzugten Ausführungsform der Erfindung werden Siloxanharze verwendet, deren Ausbeute an keramischem Rückstand nach dem thermischen Abbau mindestens 70 Gew.-% beträgt. Zu dieser Gruppe zählen Silsesquioxane, z.B. $(RSiO_{1,5})_n$, mit Liganden R wie dem Vinyl-, Allyl- oder Phenylrest, die entweder sehr reaktionsfähig sind, einen hohen Kohlenstoffgehalt haben oder beide dieser Merkmale aufweisen. Die niedrigviskosen Siloxanformulierungen können direkt mit den feinpulverigen Füllstoffen vermischt und dann auf die Substratoberflächen aufgetragen werden. Höherviskose Gele werden mit einem geeigneten Lösungsmittel auf die gewünschte Viskosität eingestellt. Ebenso wird mit Lösungsmitteln verdünnt, wenn die Viskosität der Mischungen aus Polysiloxan und Feststoff zu hoch geworden ist. Zur Verbesserung der Benetzung des Substrats durch die aufgetragene Suspension und zur Verbesserung der Haftung der Schicht auf dem Substrat wird die Oberfläche der zu beschichtenden Teile vorzugsweise mit einem Haftvermittler auf Silanbasis überzogen.

Die zum Beschichten vorgesehenen Substrate enthalten zwischen 10 und 60, vorzugsweise zwischen 20 und 50 Volumenprozent feinpulverisierten Molybdändisilizids, bezogen auf die Siloxanphase = 100 Vol.-%.

Zur Verbesserung der Beständigkeit gegen Abrasion und zur weiteren Einstellung der thermischen Ausdehnung der keramischen Schicht können der Suspension noch weitere Komponenten in feinpulveriger Form zugesetzt werden. Vorzugsweise verwendet man hierfür Silicum enthaltende Substanzen wie SiC, $CrSi_2$, $TaSi_2$, $NbSi_2$ oder $WSi_2$, die der Suspension zusätzlich in Mengen von bis zu 60 Vol.-% zugesetzt werden, wobei die Suspension vor dem Zusatz dieser Additive gleich 100 Vol.-% gesetzt wird. Zusätze dieser Art wirken im allgemeinen auch verbessernd auf die Haftung der Schicht auf dem Substrat. Besonders vorteilhaft für die oxidationsinhibierende Wirkung der Schutzschicht ist die Zumischung von Aluminiumoxid oder Alumosilikatglas bildenden Zusätzen wie Aluminiden, z.B. AlSi, AlZr-Legierungen oder Aluminiumsilicid ($Al_4Si_3$) oder Mullit oder Hydroxiden, beispielsweise Böhmit oder Hydrargillit, die durch reaktive Kombination mit den Silicid-Füllern in oxidierender Atmosphäre eine hochtemperaturbeständige teilkristalline Deckschicht bilden.

Das Auftragen der Suspension auf das Substrat kann nach jedem der bekannten Verfahren, d.h. beispielsweise durch Tauchen, Aufstreichen mit Pinsel oder Roller, durch Aufspritzen oder, falls ein tieferes Eindringen der Suspension in die Poren des Körpers beabsichtigt ist, durch eine Vakuum-Druck-Behandlung des in der Suspension untergetauchten Substratkörpers geschehen. Die Einstellung der Konsistenz der Suspension auf das jeweils verwendete Auftragsverfahren kann durch Verdünnen mit geeigneten Lösungsmitteln wie beispielsweise Toluol, Aceton oder Trichlormethan erfolgen. Diese Lösungsmittel müssen nach dem Auftragen der Schicht und vor Beginn der chemischen Vernetzungsreaktion mit Hilfe von Methoden, die jedem Fachmann bekannt sind, abgezogen, d.h. in Gasform entfernt werden.

Erfindungsgemäße Oberflächenbeschichtungen dienen als abriebfeste, hochtemperaturbeständige Oxidationsschutzschichten für poröse Substratkörper aus Siliciumcarbid bis zu Temperaturen von 1700 °C. Als poröse Substrate dieser Art sind insbesondere Formkörper aus gesintertem, reaktionsgebundenem oder rekristallisiertem Siliciumcarbid geeignet.

Im folgenden wird die Erfindung anhand von Ausführungsbeispielen erläutert.

Beispiel 1

Eine Mischung eines Polymethylsilsesquioxans (Typ NH 2100, Chemiewerke Nünchritz), die 40 Volumenprozent eines $MoSi_2$-Pulvers einer mittleren Korngröße $d_{50}$ = 3 µm (Typ Grade C, Fa. H.C. Starck, Goslar) enthielt, wurde durch Intensivmischen unter Zusatz von Aceton als Lösungsmittel in eine homogene Suspension überführt, die ungefähr eine Viskosität wie Wasser bei 20 °C hatte. In diese Suspension wurde eine Platte mit den Abmessungen 5 x 5 x 1 cm aus reaktionsgesintertem Siliciumcarbid, Porenvolumen 16 %, mittlerer Porendurchmesser ca. 30 µm, unter Normaldruck mehrmals getaucht, bis eine ca. 100 µm dicke Suspensionsschicht aufgebracht war. Dabei wurde das anhaftende Lösungsmittel nach jedem Tauchschritt unter leichtem Erwärmen entfernt. Sodann wurde die Platte in einem Trockenschrank an Luft innerhalb von 3 Stunden auf 180 °C erwärmt und zur Vollendung der Vernetzung des Siloxans noch weitere 4 Stunden bei dieser Temperatur belassen. Anschließend wurde die Platte in einen Schutzgasofen überführt, darin unter Argon innerhalb von 10 Stunden auf 1200 °C erhitzt und zum Vollenden der Reaktionspyrolyse noch eine weitere Stunde bei Endtemperatur belassen. Die entstandene Keramikverbundschicht bestand aus einer amorphen Si-O-C-Matrixphase, in die $MoSi_2$ und SiC-Teilchen eingelagert waren. Diese Schicht war fest in der Oberfläche des Substratkörpers verankert und bereits weitgehend gasdicht. Bei der nachfolgenden Auslagerung an Luft bei 1600 °C über einen Zeitraum von 10 Stunden wurde keine oxidationsbedingte Gewichtsänderung festgestellt.

Beispiel 2

Aus 100 Volumenteilen Polymethylsilsesquioxan (Typ wie in Beispiel 1), 25 Volumenteilen $MoSi_2$ (Typ wie in Beispiel 1) und 25 Volumenteilen $CrSi_2$, mittlere Korngröße 1,8 µm (nach FSSS, Hersteller H.C. Starck, Goslar) wurde unter Zusatz von 90 Gew.-% Aceton, bezogen auf die Mischung aus Polysiloxan, $MoSi_2$ und $CrSi_2$ = 100 Gew.-%, mittels eines Hochgeschwindigkeitsrührers eine Suspension von wasserähnlicher Viskosität hergestellt. Zur Beschichtung war ein Rohrstück aus reaktionsgesintertem Siliciumcarbid mit den Abmessungen, Durchmesser außen 15 mm, Durchmesser innen 11 mm, Länge 150 mm, das ein Porenvolumen von 16 % und einen mittleren Porendurchmesser von 30 µm hatte, vorgesehen. Vor der Beschichtung der Oberfläche des Rohres mit der Suspension wurde das Rohr noch mit einem Silan-Haftvermittler (Typ VTMO, Chemiewerke Hüls) beschichtet. Durch diese Maßnahme sollte die Ankopplung der funktionellen Gruppen des Polysiloxans an die SiC-Oberfläche des Substrats weiter verbessert werden. Die Aufbringung der Haftschicht erfolgte durch Tauchen des Rohrs und anschließende halbstündige Trocknung bei 50 °C an Luft. Danach wurde die vorbereitete Suspension durch wiederholtes Tauchen aufgebracht, bis eine Schichtdicke von 150 µm erreicht war. Nach dem Abziehen des Lösungsmittels wurde der Polysiloxananteil der Schicht nach langsamem Aufheizen (ca. 1 K/Min) auf 180 °C 3 Stunden lang bei Temperaturen von 180 bis 220 °C vernetzt. Die Reaktions-Reaktionspyrolyse wurde nachfolgend bei 1500 °C mit einer Haltezeit von 4 Stunden unter Stickstoffatmosphäre durchgeführt. Die so erhaltene keramische Schutzschicht bestand aus einem Gemisch von $Si_3N_4$, $Mo_2C$, $MoSi_2$, $Cr_3C_2$ und SiC. Die genannten Stoffe waren in das Matrixglas eingebettet. Der so hergestellte Körper zeigte nach 10 stündiger Behandlung bei 1500 °C an Luft keinen oxidationsbedingten Gewichtsverlust.

Beispiel 3

Eine Mischung aus 100 Vol.-% Polyphenylmethylsiloxan (Typ H62C, Fa. Wacker Chemie) und 30 Vol.-% MoSi$_2$-Pulver (Typ wie unter Beispiel 1) sowie 10 Vol.-% Al$_4$Si$_3$ (maximale Teilchengröße 150 μm, Fa. Goodfellow, Bad Nauheim) wurde mit Trichlormethan zu einer Suspension mit wasserähnlicher Konsistenz aufbereitet. Diese Suspension wurde mit einer Spritzpistole auf eine Platte, Abmessungen 10 x 12 x 1 cm aus reaktionsgesintertem Siliciumcarbid aufgespritzt und die aufgebrachte Schicht danach getrocknet, wobei der Vorgang so oft wiederholt wurde, bis eine Schichtdicke von ca. 50 μm erreicht war. Die thermische Vernetzung des Polymers erfolgte wie in den Beispielen 1 und 2 beschrieben, bei 200 °C. Darauf folgte in ebenfalls im Prinzip vorbeschriebener Weise die Reaktionspyrolyse, die in diesem Beispiel bei 1250 °C in Argonatmosphäre vorgenommen wurde. Die so beschichtete Platte wurde danach mit einer Heizrate von 2 K/Minute von 1200 bis 1600 °C getempert. Die auf diese Weise gebildete oberflächendichte Schutzschicht bestand neben der Matrixphase aus einem Alumosilikatglas und kristallinem Mullit (Al$_2$O$_3$ x SiO$_2$). Sie war bis zu Temperaturen von 1600 °C oxidationsbeständig, d.h. gewichtskonstant.

Beispiel 4

Ein SiC-Rohr wie es in Beispiel 2 beschrieben worden ist, wurde in einem evakuierbaren Gefäß, das mit einer dünnflüssigen (Viskosität ähnlich Wasser) Suspension aus einem Polysiloxan und MoSi$_2$, synthetischem Mullit (Fa. VAW Aluminium AG, Schwandorf), Körnung 0 bis 0,1 mm und Aluminiumsilicid (Typ wie in Beispiel 3) gefüllt war, untergetaucht. Sodann wurde das Gefäß auf einen Druck von < 10$^2$ Pa evakuiert und ca. 5 Minuten lang bei diesem Druck gehalten. Danach wurde das Gefäß belüftet. Dadurch wurde die Suspension bis zu einem Abstand von ca. 2 mm von der Formteiloberfläche in die Poren des Rohres gepreßt. Nach der Entnahme des Rohres aus der Suspension wurde dieses zur Vernetzung und Pyrolysierung der aufgetragenen Schicht Bedingungen unterworfen wie sie in Beispiel 3 für diesen Vorgang beschrieben worden sind. Für die Herstellung der Suspension wurde ein Polyphenylmethylsiloxan (Typ H62C, Fa. Wacker Chemie) verwendet, dem 25 Vol.-% MoSi$_2$-Pulver (Typ wie in Beispiel 1) sowie 5 Vol.-% Mullit und 5 Vol.-% Al$_4$Si$_3$, bezogen auf die Siloxanphase = 100 Vol.-%, zugesetzt worden waren. Die dünnflüssige Konsistenz wurde in diesem Fall mit Toluol eingestellt. Nach Auslagerung des so beschichteten Rohres an Luft bei 1500 °C wurde eine nochmals verbesserte Verankerung der oxidationsbeständigen Schicht auf der Rohroberfläche festgestellt. So hergestellte Beschichtungen zeigen eine nochmals verbesserte Langzeitoxidationsbeständigkeit bei Temperaturen oberhalb 1600 °C.

Beispiel 5

Polyphenylsiloxan (Typ wie in Beispiel 3) entsprechend 100 Vol.-%, wurde mit 20 Vol.-% MoSi$_2$ (Typ wie in Beispiel 1) und mit 30 Vol.-% eines hochfeinen SiC-Pulvers (FEPA-Körnung F 1200, Hersteller Lonza-Werke Landshut) versetzt und unter Mischen durch Zusatz von Aceton zu einer streichfähigen Suspension verarbeitet. Mit dieser Suspension wurde eine Platte, 10 x 12 x 1 cm, aus rekristallisiertem SiC durch Streichen mit einem Pinsel solange beschichtet, bis eine Schichtdicke von 300 μm erreicht war. Die Umwandlung der so aufgetragenen Schicht in die fertige keramische Schutzschicht geschah wie in Beispiel 3. Bei den durchgeführten Verarbeitungsschritten drangen die hochfeinen SiC-Partikel in Poren, Risse und Unebenheiten der Oberfläche des Substratkörpers ein. Dadurch entstand eine bis zu Temperaturen von 1500 °C oxidationsbeständige, in der Oberfläche des Substratkörpers gut verankerte und besonders glatte Oberfläche, die zudem eine ausgezeichnete Abrasionsbeständigkeit aufwies.

**Patentansprüche**

1. Abrasionsfeste, Substratkörper aus porösem Siliciumcarbid gegen Oxidation durch Sauerstoff schützende, ein Matrixglas, Siliciumcarbid und Molybdändisilicid enthaltende Oberflächenschicht dadurch gekennzeichnet, daß
die Schicht aus einem Material besteht, das aus einer Mischung aus einem Polysiloxan und darin fein verteiltem Molybdändisilicid durch thermische Behandlung bis zu einer Temperatur von 1700 °C entstanden ist und das noch einen Anteil bei der thermischen Behandlung nicht umgesetzten Molybdändisilicids enthält.

2. Oberflächenschutzschicht nach Patentanspruch 1, dadurch gekennzeichnet, daß
die Oberflächenschicht eine Dicke von 5 bis 500 μm aufweist.

3. Oberflächenschutzschicht nach Patentanspruch 1, dadurch gekennzeichnet, daß
die Oberflächenschutzschicht eine Dicke von 30 bis 300 μm aufweist.

4. Verfahren zur Herstellung einer abrasionsfesten, Substratkörper aus Siliciumcarbid gegen Oxidation durch Sauerstoff schützende, mindestens ein Matrixglas, Siliciumcarbid und Molybdändisilicid enthaltende Oberflächenschicht,
dadurch gekennzeichnet, daß
eine Suspension aus einem Polysiloxan und Molybdändisilicidpartikeln hergestellt wird,
diese Suspension auf die zu schützenden Teile der Oberfläche des Körpers aus Siliciumcarbid aufgebracht wird, der so beschichtete Körper einer ersten Temperaturbehandlung bis zu einer Temperatur von maximal 400 °C unterworfen wird,
der so temperaturbehandelte Körper in einer, bezogen auf oxidative Einwirkungen, inerten Atmosphäre einer Pyrolysebehandlung im Bereich von 1000 bis 1600 °C unterzogen wird und der Körper nach dieser Pyrolysebehandlung einer Temperaturbehandlung oberhalb von 800 °C in oxidierender Atmosphäre unterworfen wird.

5. Verfahren zur Herstellung einer Oberflächenschicht nach Patentanspruch 4,
dadurch gekennzeichnet, daß
die Suspension aus einem ersten Anteil von Polysiloxan = 100 Vol.-% und mindestens einem zweiten Anteil von dem Polysiloxan zugesetzten 10 bis 60 Vol.-% Molybdändisilicid besteht.

6. Verfahren zur Herstellung einer Oberflächenschicht nach Patentanspruch 4,
dadurch gekennzeichnet, daß
die Suspension aus einem ersten Anteil von Polysiloxan = 100 Vol.-% und mindestens einem zweiten Anteil von dem Polysiloxan zugesetzten 20 bis 50 Volumenprozent Molybdändisilicid besteht.

7. Verfahren zur Herstellung einer Oberflächenschicht nach einem der Patentansprüche 4, 5 und 6,
dadurch gekennzeichnet, daß
die für die Beschichtung vorgesehene Suspension zusätzlich 0 bis 60 Volumenprozent Substanzen enthält, die bei mindestens einer der thermischen Behandlungsstufen Aluminiumoxid oder eine Alumosilikatphase bilden.

8. Verfahren zur Herstellung einer Oberflächenschicht nach einem der Patentansprüche 4, 5, 6 und 7,
dadurch gekennzeichnet, daß
die aus Polysiloxan und Molybdändisilicid bestehende Beschichtungssuspension zusätzlich 0 bis 60 Volumenprozent eines Materials aus der Gruppe Siliciumcarbid und der Silicide der Metalle Niob, Tantal, Chrom, Wolfram und Aluminium in fein pulverisierter Form enthält.

9. Verfahren zur Herstellung einer Oberflächenschicht nach einem der Patentansprüche 4, 5, 6, 7 und 8,
dadurch gekennzeichnet, daß
das verwendete Siloxanharz nach dem verfahrensgemäßen thermischen Abbau eine Ausbeute an keramischem Rückstand von mindestens 70 Massenprozent ergibt.

10. Verwendung von nach den vorstehenden Verfahrensansprüchen hergestellten Oberflächenschichten als abriebfeste hochtemperaturbeständige Oxidationsschutzschichten für poröse Substratkörper aus Siliciumcarbid.

11. Verwendung von nach den vorstehenden Verfahrensansprüchen hergestellten Oberflächenschichten gemäß Patentanspruch 10 bis zu Temperaturen von 1700 °C.